# EUROPEAN PATENT APPLICATION

(11) **EP 1 501 005 A2**
(43) Date of publication of application: **26.01.2005**
(21) Application number: 03022463.8
(22) Date of filing: 08.10.2003
(51) Int. Cl.: G06F 3/02, G06F 1/16

(54) **PDA keyboard**

(30) Priority: 21.07.2003 CN 03275846 U
(71) Applicant: HANN HWA INDUSTRIAL CO.,LTD., Hsin-Tien City, Tapei Hsien (TW)
(72) Inventor: Wu, Jorson, Hsin-Tien City Taipei Hsien (TW)
(74) Representative: Helms, Joachim, Dipl.-Ing. Patentanwalt

(57) **Abstract**

A PDA keyboard comprising an upper shell, a lower shell, a plurality keypads and at least one function key. The upper shell and the lower shell can be lifted and opened to form a rectangular space, the rectangular space can accommodate the plurality keypads; the plurality keypads contains at least one accent key and a special symbol control key. On top of each of the plurality keypads consists of at least one English alphabet, or one accent key symbol or one special symbol. Users can press the accent key and one of the plurality keypads to generate an accent symbol, and press the special symbol control key along with one of the plurality keypads to generate a special symbol character.

## Description

### BACKGROUND OF THE INVENTION

### 1. Field of the Invention:

This invention relates generally to a keyboard and, more specifically, to a PDA keyboard that generates English characters, accent symbols and special symbols.

### 2. Description of the Prior Art:

Heretofore, it is known that the keyboard of a PDA generally consists of a shell, a plurality keypads and at least one function key. For example, Taiwan listed pattern no. 89213563, "THE STRUCTURE OF KEYBOARD of PDA", offers a PDA keyboard that consists of a shell, a keypad set, several function keys, PCB and a PDA stand; the major character is: the shell can be lifted and opened to right and left to fit the rectangular keypad set, the keypad set is in two separated portion to be stored in the bottom of the shell and inner side of the top cover, at least one portion of the keypad can slide inside the shell and combine with other portion to form a complete keyboard. However the known keyboard does not offer accent characters and special symbols such as Euro, Japanese Yen.

### SUMMARY OF THE INVENTION

It is therefore a primary object of the invention to provide PDA keyboard that has at least one accent symbol control key and at least one special character symbol control key to generate English characters, accent symbols and special symbols.

In order to achieve the objective set forth, a PDA keyboard in accordance with the present invention comprises an upper shell, a lower shell, a plurality keypads and at least one function key. The upper shell and the lower shell can be lifted and opened to form a rectangular space, the rectangular space can accommodate the plurality keypads; the plurality keypads contains at least one accent key and a special symbol control key. On top of each of the plurality keypads consists of at least one English alphabet, or one accent key symbol or one special symbol. Users can press the accent key and one of the plurality keypads to generate an accent symbol, and press the special symbol control key along with one of the plurality keypads to generate a special symbol character.

### BRIEF DESCRIPTION OF THE DRAWINGS

The accomplishment of the above-mentioned object of the present invention will become apparent from the following description and its accompanying drawings which disclose illustrative an embodiment of the present invention, and are as follows:
FIG 1 is a perspective view of the present invention;
FIG 2 is a keypad layout chart of the present invention; and
FIG 3 is an assembly view of the stand of the present invention.

### DESCRIPTION OF THE PREFERRED EMBODIMENT

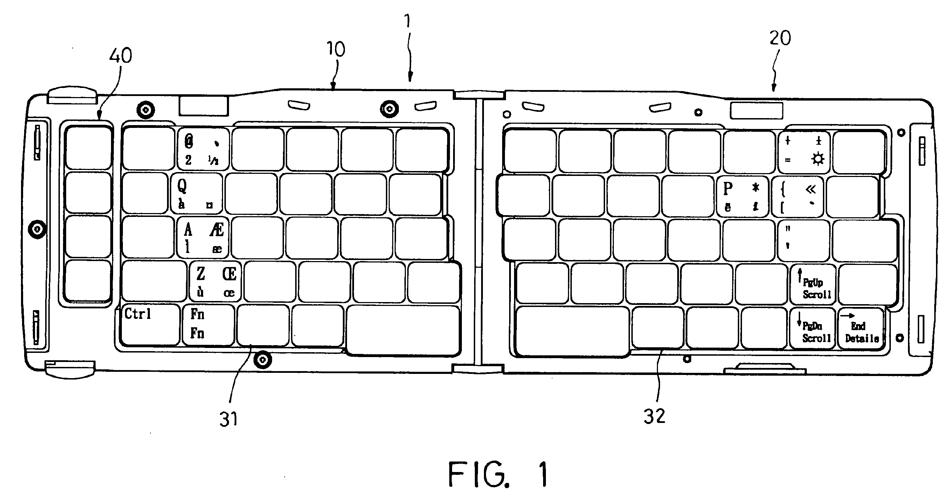

Referring to FIG 1, the present invention comprises of an upper shell 10, a lower shell 20, a plurality keypad 30 and at least one function key 40. The upper shell 10 and the lower shell 20 are made of plastic and can be lifted and covered toward left and right; the upper shell 10 and the lower shell 20 can be lifted and opened to form a rectangular space, the rectangular space can accommodate the plurality keypad 30; the plurality keypad 30 contains at least one accent key 31 and a special symbol control key 32. On top of each of the plurality keypad 30 consists of at least one English alphabet, or one accent key symbol and or special symbol; at least a function key 40 is designed for users for convenience purpose, the function key 40 can be Inbox, Contacts, To do or Tasks keys.

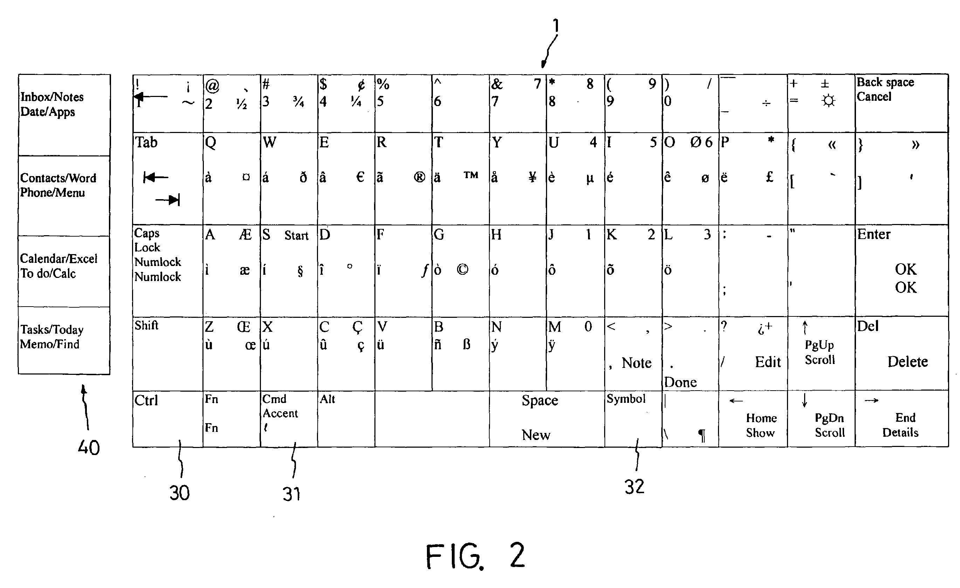

Referring to FIG 2, the keyboard 1 has accent key for European languages, such as German, French, Italian and Finland, and special symbol keys of Euro, Japanese Yen, Greek alphabets and other special symbols; users can press the accent key 31 and one of the plurality keypad 30 to generate an accent symbol, and press the special symbol control key 32 along with one of the plurality keypad 30 to generate a special symbol character.

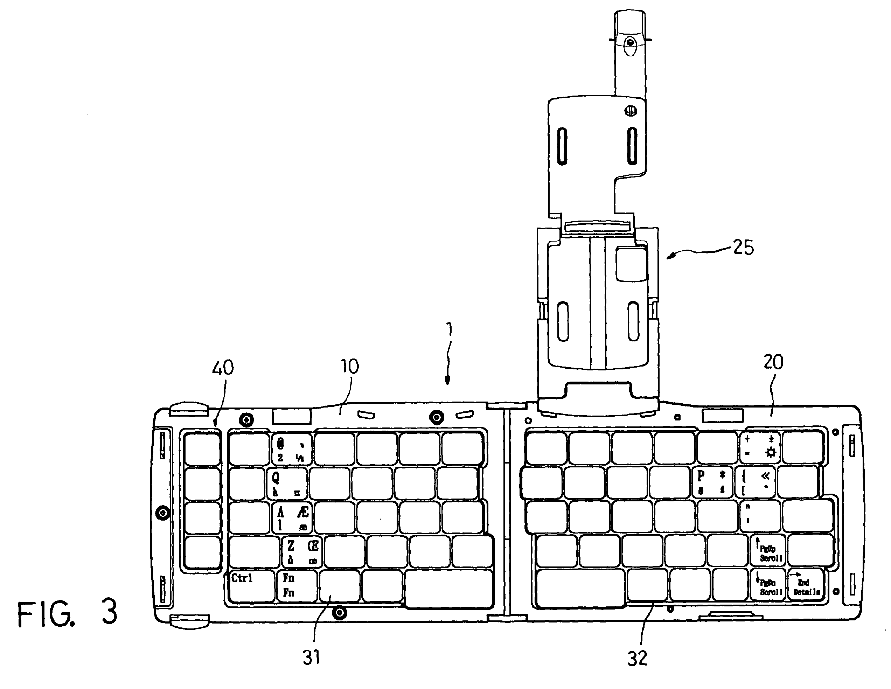

Referring to FIG 3, a stand 25 is beneath the lower shell 20 to support the PDA, the stand 25 can be hidden inside the lower shell 20 while not use; such scheme is convenient for the keyboard 1 to cover and store.

While a preferred embodiment of the invention has been shown and described in detail, it will be readily understood and appreciated that numerous omissions, changes and additions may be made without departing from the spirit and scope of the invention.

## Claims

1. A PDA keyboard comprising: an upper shell, a lower shell, a plurality keypad and at least one function key, said upper shell and said lower shell can be lifted toward left and right and opened to form a rectangular space, the rectangular space can accommodate said plurality keypad, said plurality keypads contain at least one accent key and a special symbol control key, on top of each of said plurality keypad consists of at least one English alphabet, accent key symbol and special symbol, users can press said accent key and one of said plurality keypads to generate an accent symbol, and press said special symbol control key along with one of said plurality keypads to generate a special symbol character.

2. The PDA keyboard recited in claim 1, wherein said accent key is for European languages, such as German, French, Italian and Finland.

3. The PDA keyboard recited in claim 1, wherein said special symbol keys are for Euro, Japanese Yen, Greek alphabets and other special symbols.

4. The PDA keyboard recited in claim 1, wherein a stand located beneath said lower shell to support the PDA.

5. The PDA keyboard recited in claim 4, wherein said stand can be hidden inside said lower shell.
